# EUROPEAN PATENT SPECIFICATION

(11) **EP 0 500 598 B1**
(45) Date of publication and mention of the grant of the patent: **26.03.1997**
(21) Application number: 90916046.7
(22) Date of filing: 05.11.1990
(51) Int. Cl.: G01N 27/16, G01N 25/22

(54) **COMBUSTIBLE GAS DETECTION**
NACHWEIS VON BRENNBAREN GASEN
DETECTION DE GAZ COMBUSTIBLES

(30) Priority: 03.11.1989 GB 8924889
(43) Date of publication of application: 02.09.1992
(73) Proprietor: NEOTRONICS LIMITED, Bishop's Stortford Hertfordshire CM22 6PU (GB)
(72) Inventor: IREDALE, Peter Julian, Rayne, Essex CM7 6PU (GB)
(74) Representative: Hedley, Nicholas James Matthew
(86) International application number: GB9001695
(87) International publication number: WO9106849

(56) References cited:
- WO-A-90/12313
- US-A- 3 531 980
- US-A- 4 077 775
- US-A- 4 627 269

## Description

### TECHNICAL FIELD

The present invention relates to the detection of combustible gas.

### BACKGROUND ART

Combustible gases can be detected by a device called a 'pellistor' comprises an electrical resistance wire in thermal contact with a catalyst that catalyses the decomposition of the combustible material. The catalyst may be deposited directly on the resistance wire or it may be deposited on the surface of a bead, e.g. of refractory material, through which the resistance wire passes, the part of the wire lying within the bead is usually coiled to provide the pellistor with a sufficient electrical resistance; by passing an electrical current through the wire the pellistor can be heated to a temperature at which the combustible gas will decompose on the catalyst surface. The current flowing through the wire is measured and provides a measure of the amount of a combustible gas in the atmosphere as follows: the decomposition of combustible gas on the catalyst surface gives out energy which heats the resistance wire, the increase in temperature causes the resistance of the wire to increase and so the current flowing through the pellistor decreases (assuming a constant potential drop across the wire) and this is detected and provides a measure of the amount of the combustible gas in the atmosphere.

One problem with pellistor operation is that the signal from a given pellistor (i.e. the change in the resistance of the pellistor wire for each percent of a gas) is not consistent from gas to gas and 1% methane will give a different reading to, say, 1% xylene; generally speaking the resistance change in a pellistor for a given percentage of combustible gas decreases as the molecular weight of the gas increases. This gives rise to two problems: firstly, it is necessary to calibrate the pellistor for each different type of gas that it is desired to detect and secondly inaccurate readings will be obtained if two or more combustible gases are present in the atmosphere being detected.

In the present specification, the percentage of any combustible gas is expressed as the percentage of the concentration of that gas related to its lower explosive limit (LEL). Thus, the LEL is taken to be 100% and, for example a 10% concentration is one tenth of the LEL concentration.

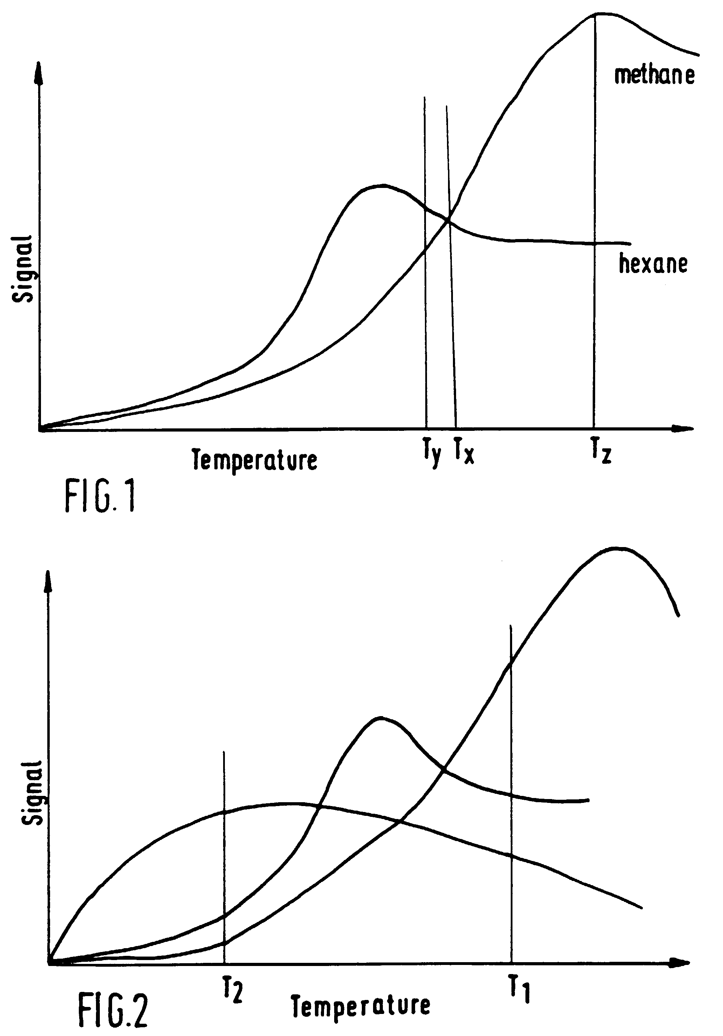

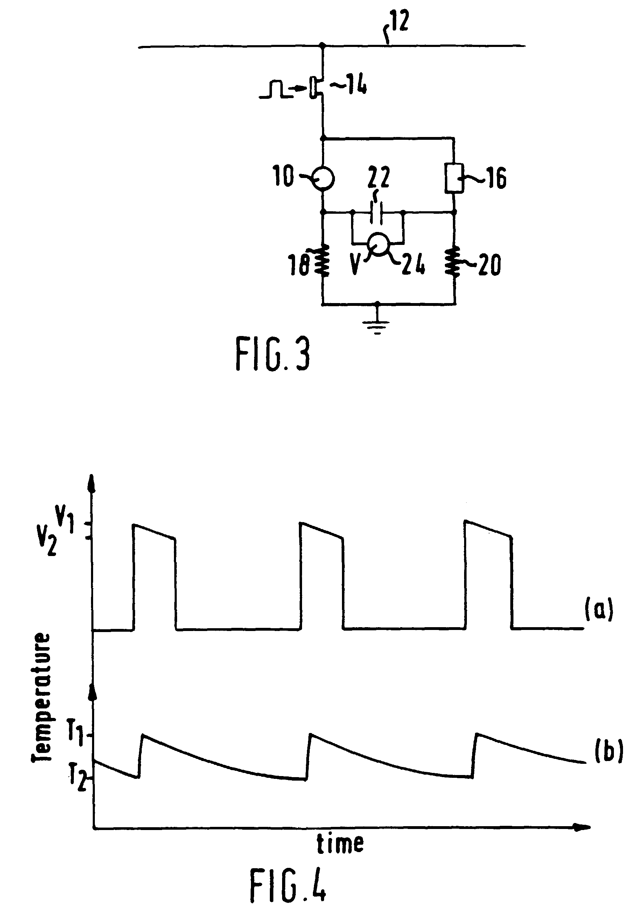

The optimum operating temperature for a pellistor varies from gas to gas and Figure 1 shows the output signal (measured as the current (in mA) flowing through a pellistor) against the normal operating temperature of a pellistor for methane and hexane at a given percentage (40%) of their lower explosive limit (LEL). Thus, if one were operating at a temperature T₃ in order to detect methane and if hexane were in fact present then the output signal would indicate that the amount of combustible gas is lower than in fact it is and the appropriate alarm warning of the build-up of combustible gas may not be triggered.

The object of the present invention is to provide a system which produces an acceptable signal for the major combustible gases (e.g. methane, hexane, acetone and xylene) without requiring separate calibration for each gas.

US 3,531,980, US 3,560,160, US 4,002,429 and GB 1,427,515 described methods of analysing the amount of combustible gases in a sample by catalytically oxidising the combustible gas. The specifications also teach that a resistance wire forming one arm of a wheatstone bridge should be in thermal contact with the catalyst so that the catalytic oxidation of the combustible gas causes an increase in the temperature of the resistance wire thereby altering its resistance and causing a potential difference between the balance points of the wheatstone bridge. The potential difference is integrated over time to provide a measure of the amount of the combustible gas in the sample. One problem with this technique is that it requires an accurate sample of the gas to be taken and the measures necessary to ensure an accurate sample size are often complex. In contrast, the present invention can be used without the need to take samples of accurate size.

US-4 627 269 describes a method of analysing an atmosphere for combustible gases which involves measuring the resistance of a pellistor at two different temperatures in the presence of the test atmosphere and in an inert atmosphere.

### DISCLOSURE OF INVENTION

Instead of applying a fixed voltage across the pellistor to maintain the pellistor at a fixed temperature (in the absence of a combustible gas), the present invention deliberately varies the temperature of the pellistor over a range and processes the changing signal received over that range to provide a more accurate reading of the amounts of combustible gases present; in one embodiment we have found that, by choosing suitable temperature ranges, an output signal can be produced that is approximately the same for two or more combustible gases. This is illustrated in Figure 2, which is a graph of the signal from a pellistor (the current flowing through the pellistor) against temperature T for three gases (e.g. methane, hexane and xylene). The areas under the three curves within the temperature range T₁-T₂ are approximately equal. Thus when the temperature of the pellistor is changed from temperature T₁ to T₂ (or vice versa), and the resulting output signal is integrated, the integrated signal is a measure of the percentage of LEL for each gas (or gas mixture) irrespective of the nature of the gas.

It is evident that the areas under the graphs will not be exactly identical but they will be to an acceptable approximation.

The variation in temperature can be brought about by applying pulses of electrical potential periodically to the pellistors; it is known e.g. from GB- 2,185,577 to heat pellistors using electrical current of pulsed wave form so that the temperature of the pellistor can be altered by changing the frequency or the pulse duration of the waveform. However, in these known cases the frequency of the current is so high that the temperature of the pellistor remains constant and does not change significantly through a cycle. In the present invention, the pellistor temperature must change significantly during the course of a pulse.

According to a second embodiment of the present invention, the change in the resistance of a pellistor can be analysed over the temperature range to provide readings of the amounts of each of two or more combustible gases in an atmosphere.

Thus, according to the present invention there is provided a method and apparatus as claimed in the accompanying claims.

In the present invention, the resistance of the resistance wire can be measured by incorporating the wire/catalyst in one arm of a wheatstone bridge and measuring the voltage between the balance points of the bridge. As will be apparent, it is not necessary to measure the resistance of the wire directly and other parameters that vary in accordance with the resistance, e.g. the current flowing through the wire or the voltage across a wheatstone bridge can instead be measured.

Hereafter in the description, the combined resistance wire and catalyst will, for simplicity, be referred to as a 'pellistor'.

The potential difference across the pellistor is preferably applied cyclically and in the course of each cycle, the temperature of the pellistor will change from a first temperature T₁ to a second temperature T₂ (for a fixed amount of combustible gas in the atmosphere).

Although theoretically it is possible for temperature T₂ to be higher than temperature T₁, it is preferred that temperature T₁ is greater than tempeature T₂ and, in each cycle, the pellistor is allowed to cool from temperature T₁ to temperature T₂; if T₂ were higher than T₁, the pellistor would as it cooled down from temperature T₂, provide a signal and this could lead to inaccuracies.

It is important that the temperature change between temperatures T₁ and T₂ should be gradual by which we mean that the transition from temperature T₁ to T₂ must not be instantaneous and should be sufficiently long to allow the pellistor to provide signals at temperatures intermediate between T₁ and T₂ but the term 'gradual' is not intended to require that the temperature necessarily changes smoothly between temperatures T₁ and T₂. It is desirable, in order to provide maximum accuracy, for the frequency of the cycles to be as high as possible and so the time of the transition between temperatures T₁ and T₂ should not be excessive. We have found that a transition time of 1 to 20 ms, e.g. 2 to 10 ms and particulary about 4 as is sufficient to provide accurate readings.

It will be appreciated that the temperatures T₁ and T₂ of the pellistor will not usually be known but rather the potential supplied to the pellistor will be varied (usually empirically) to provide temperatures T₁ and T₂.

### BRIEF DESCRIPTION OF THE DRAWINGS

The invention will be explained in further detail with the aid of the following drawings in which:
Figure 1 is a graph of the change in the output signal from a prior art wheatstone bridge incorporating a pellistor (measured as the current flowing through the pellistor) against the pellistor operating temperature for methane and hexane at a fixed concentration (measured as % LEL);
Figure 2 is the same as Figure 1 but in respect of methane, hexane, and xylene;
Figure 3 shows a pellistor control circuit for use in the present invention;
Figure 4 shows (a) the voltage pulses supplied by the circuit of Figure 3 to the pellistor and (b) the consequential variation in operating temperature of the pellistor in the absence of combustible gas;
Figure 5 is a graph of the output signal (in mA) from the circuit of Figure 3 against the concentration of methane (measured as % LEL),
Figure 6 shows a second pellistor control circuit of the present invention,
Figure 7 is a graph showing the signal received from the circuit of Figure 6 against current passed through the circuit for an atmosphere containing 40% LEL methane and 40% LEL pentane,
Figures 8 and 9 are graphs showing the signal of Figure 7 resolved into the signal for methane (Figure 8) and the signal for pentane (Figure 9).

The graphs of Figures 1 and 2 have already been discussed above but two further points should be made about these Figures:
(1) It is possible to operate a pellistor to detect two gases so that the output signal per Z LEL of each gas is identical by maintaining the temperature of the pellistor at Tₓ shown in Figure 1. The problem with this approach is that a small variation in operating temperature (to say T_{y}) has grave effects on the signal produced by the two gases. The integration of the signal between temperatures T₁ and T₂ (see Figure 2) gives a far lower error when there are slight variations in temperatures. In this connection it should be remembered that pellistors are often powered by batteries in portable detection units and so are prone to slight variations in operating voltage causing errors in the operating temperature of a pellistor.
(2) The choice of temperatures T₁ and T₂ in the graphs of Figures 1 and 2 are obviously important. They can be optimised for any combination of combustible gases that it is desired to detect, but their precise values will usually be set empirically. The difference between temperatures T₁ and T₂ is preferably between 30 and 70°C, e.g. 40 to 60 °C and preferably about 50°C (although the exact difference will of course depend on the shapes of the signal vs temperature graphs for the desired gases). If the temperature variation is excessively high the pellistor wire could melt (or fuse) or the catalyst may be damaged and if it is too low, the pellistor will, in effect, be operating at a constant temperature which does not give the benefits of the present invention.

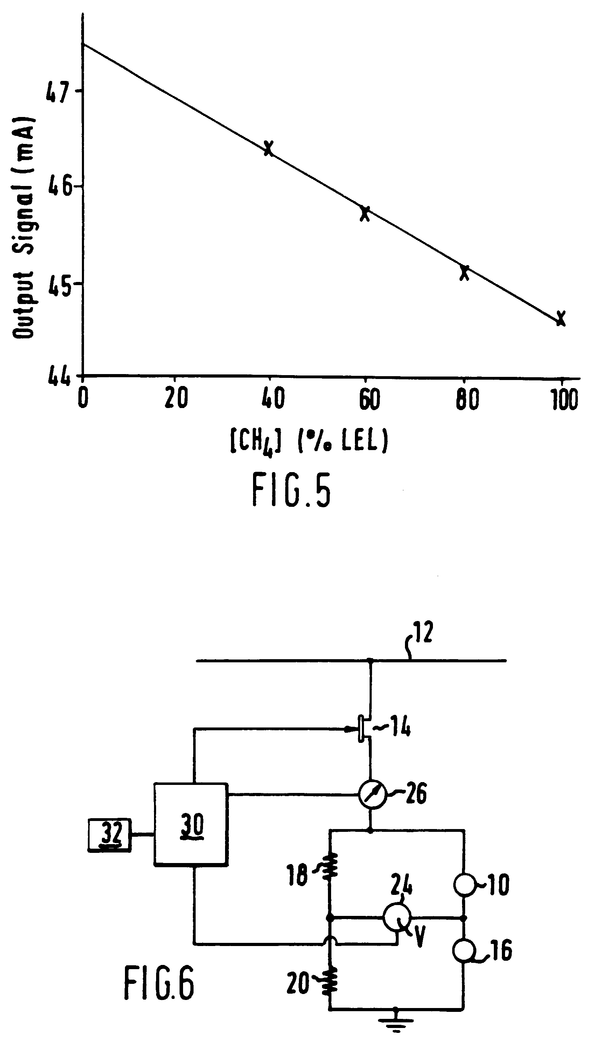

Referring to Figures 3 and 4, the former shows a circuit for providing the desired temperature changes; the pellistor 10 is incorporated into a bridge circuit connected between a supply rail 12 at 4.4V and earth. A pulse generator 14 of standard, known type which incorporates a field effect transistor, provides a pulsed voltage (shown in Figure 4a) to the bridge; the control of the pulses can be achieved by a microprocessor. Apart from the pellistor, the bridge contains a thermistor 16, which is positioned close to the pellistor, and two fixed resistors 18 and 20 in order to provide temperature compensation. Instead of a thermistor 16, a second pellistor may be used but the second pellistor should not have any catalyst or the catalyst should be poisoned. A capacitor 22 is connected across the bridge to integrate the signals from the pellistor 10 and the potential across capacitor 22, as measured by a digital voltmeter 24 of high resistance and low impedance, provides a measure signal of the amount of combustible gas in the atmosphere under test, as will be explained in greater detail below. Alternatively, if the voltmeter has a suitable internal capacitance, the capacitor 22 can be dispensed with. As an alternative the current flowing through the pellistor can be integrated and measured.

The pulsed voltage supplied by pulse generator 14 to pellistor 10 is shown in Figure 4a and the variation in the temperature of the pellistor is shown in Figure 4b. Needless to say the exact temperature of the pellistor will increase with increasing quantities of combustible gases in the atmosphere being sensed but the temperature plot in Figure 4b gives a qualitative idea of the variation in the pellistor temperature over a cycle. The difference between the voltages at the beginning and the end of each peak (V₁ and V₂) can in the arrangement of Figure 3 be approximately 10 to 12 mV (from 212 mV to 200 mV) which gives a temperature variation of approximately 375°C (T₁) to 325°C (T₂).

The signal produced by the pellistor is fed to one plate of capacitor 22 while the other plate is supplied with current by the thermistor 16, the potential between the plates being measured by digital voltmeter 24 and gives a measure of the amount of combustible gas present.

If combustible gas is present in the atmosphere around the pellistor, it will be decomposed on the surface of the pellistor causing the temperature of the pellistor to rise, thereby increasing the resistance of the pellistor; thus the voltage drop across the pellistor increases and so the potential supplied by the pellistor to capacitor 22 will decrease; the magnitude of the voltage drop will depend on the amount of combustible gas in the atmosphere under test.

The frequency of the pulses supplied by pulse generator 14 can be varied but we have found that a pulse duration of 4mS with an interval between the end of one pulse and the beginning of the next of 12.2 mS has proved satisfactory.

The circuit of Figure 6 is essentially the same as that of Figure 3 except the capacitor 22 has been removed, an ammeter 26 is connected to detect the current supplied to the bridge and the output of voltmeter 24 is connected to a microprocessor 30 incorporating an output device 32, which may be a graph-plotter, a display or a printer. The microprocessor 30 can, of course, control the voltage pulses applied at 14 and this is shown in Figure 6. The other elements of the circuit of Figure 6 are the same as the circuit of Figure 3 and the same reference numbers have been used in the two circuits to indicate the same elements.

It will be appreciated that the voltage difference at the voltmeter 24 will provide an approximate measure of the resistance of the pellistor 10 and the current flowing through the bridge (as measured by the ammeter 26) will govern the operating temperature of the pellistor 10.

The apparatus of Figure 6 must be zeroed before it can operate satisfactorily. This is done by exposing the pellistor to an atmosphere containing no combustible gas; pulses of potential of the form shown in Figure 4(a) are applied across the bridge by device 14 under the control of the microprocessor 30. The voltages between the balance points of the bridge (as measured by the voltmeter 24) during the course of each pulse (as measured by the ammeter 26) are stored in the microprocessor 30 as "zero voltages". The pellistor 10 is then exposed to a test atmosphere containing combustible gas and the voltages between the balance points of the bridge (as measured by the voltmeter 24) during the course of each pulse are fed to the microprocessor 30. The zero voltages are then subtracted from the test voltages (at corresponding times of the pulse) to provide voltage values (hereafter called "signal voltages") due to the presence in the atmosphere of the combustible test gas. The zero voltages need only be taken occasionally, e.g. when the apparatus is first switched on.

If there is only one combustible gas in the atmosphere, the amount of this gas can be found either by dividing one of the signal voltages found in any one pulse, e.g. the maximum signal voltage found, by a signal value representing 100% LEL of that gas or by integrating the signal voltages over the course of part or the whole of a voltage cycle and dividing the integrated signal voltage by a signal value representing 100% LEL of that gas. In either case, the result will be expressed as a percentage of the gas compared to the lower explosive limit of the gas.

If there are two or more combustible gases in the atmosphere, the amounts of each can be found by resolving the graph of the signal voltages over the course of a voltage cycle into graphs for each individual combusible gas and perfoming the exercise described in the previous paragraph on the individual resolved graphs. The resolution of the signal voltage graph into graphs for each gas can be performed by means of commercially-available computer software. It is not of course necessary for graphs to be drawn but is convenient here to think of actual graphs in order to assist an understanding of these steps. An example of the resolution of a signal voltage graph is given in Example 3 below.

### Example 1

The circuit shown in Figure 3 is used to measure the amount of methane in an atmosphere. The pulses produced by the pulse generator have the form shown in Figure 4a with a pulse frequency of 16.2 mS and a pulse duration of 4 mS, with a mean current of 47.7 mA. The results are shown in Figure 5 which is a plot of the current through the pellistor (in mA) against concentration of methane (in % of LEL). Figure 5 shows that measuring the concentration over a range of temperatures and integrating the resulting pellistor output to provide an output signal provides a near linear correlation between output signal and % methane.

### Example 2

The experiment of Example 1 was repeated both for hexane and for methane. The results were as follows:

| Gas | Signal mA/% LEL | Hexane/methane signal ratio | Theoretical hexane/methane signal ratio |
|---|---|---|---|
| Methane | 0.0325 | 1.00 | 1.00 |
| Hexane | 0.0350 | 1.08 | 0.37 |

The theoretical hexane/methane signal ratio shown in the above table is the ratio of the signals that one would normally expect for the two gases using the type of pellistor in the circuit of Figure 3 taken at the optimum temperature for each gas. Thus, it can be seen that by operating according to the present invention the signal to methane is practically identical to the signal to hexane and this allows the same detector to be used without further calibration to measure both hexane and methane and mixtures thereof.

One advantage of the arrangement of the present invention for use with high molecular weight gases, e.g. xylene, is that it prevents the poisoning of the pellistor. High molecular weight gases are usually detected at relatively low temperatures and their decomposition can cause a deposit on the pellistor catalyst surface. Because the arrangement of the present invention operates over a broad temperature range that includes a relatively high temperature, the deposits do not form on the pellistor or, if they do form, they are at least partially burnt off at the high temperatures involved.

### Example 3

The pellistor 10 in the circuit of Figure 6 is exposed to an atmosphere containing no combustible gas; pulses of potential of the form shown in Figure 4(a) are applied across the bridge by device 14 under the control of the microprocessor 30. The voltages across the bridge (as measured by the voltmeter 24) applied during the course of each pulse are stored in the microprocessor 30 as "zero voltages". The pellistor 10 is then exposed to a test atmosphere containing methane and pentane each in an amount of 40% of their respective LELs and the voltage pulses (as shown in Figure 4(a)) are imposed across the bridge. The voltages between the balance points of the bridge (as measured by the voltmeter 24) during the course of each pulse are fed to the microprocessor 30. The zero voltages are then subtracted from the test voltages to provide signal voltages, i.e. voltage changes due to the presence in the atmosphere of methane and pentane.

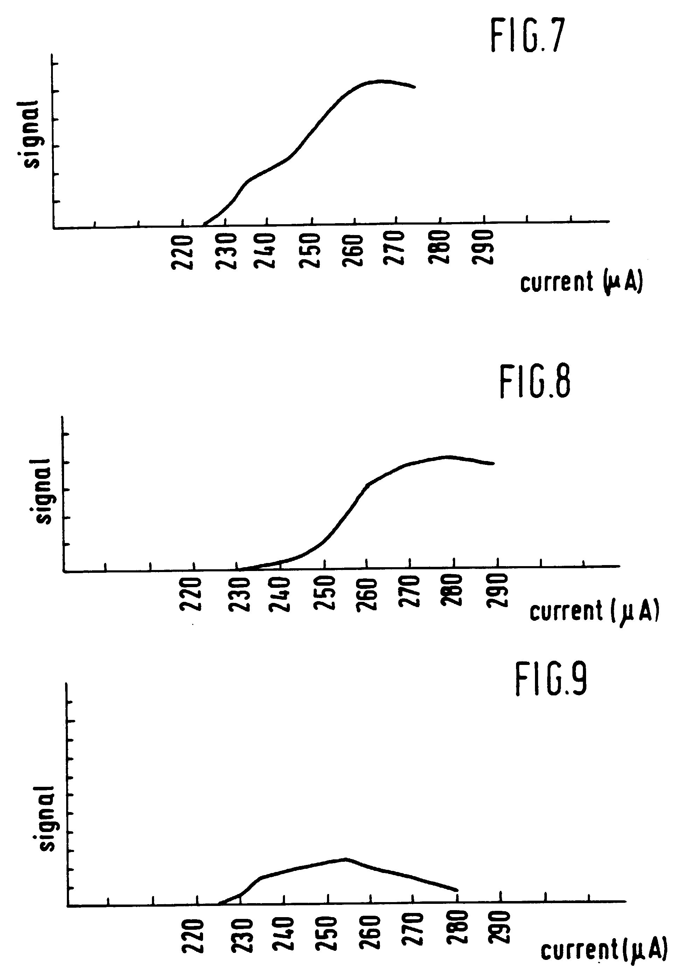

The signal voltages over the course of a pulse for the above test atmosphere against current (as measured by ammeter 26) are plotted in Figure 7.

It will be observed that the graph shown in Figure 7 has a complex structure. It is possible to resolve the graph of Figure 7 into two component curves shown in Figures 8 and 9 using commercially-available computer software; basically, this is achieved by counting the number of peaks (or inflection points) in the graph and assuming that the graph is made up of a corresponding number of Gaussian curves. This has been done in respect of the graph in Figure 7 to provide a graph (Figure 8) for methane; the graph for pentane (Figure 9) may then be derived by subtracting the graph of Figure 8 from that of Figure 7. The amount of each gas can be calculated either by integrating the resolved graphs (i.e. graphs of Figures 8 and 9) and dividing the resulting integrated values by the corresponding integrated value for 100% LEL of the respective gas or by measuring the maximum signal voltage and dividing it by the corresponding maximum signal at 100% LEL of the respective gas to provide readings expressed as percentages of the LEL.

The above calculations can be performed by the microprocessor 30 without drawing the graphs shown in Figures 7 to 9.

## Claims

1. A method of measuring the amount of one or more combustible gas in an atmosphere, which method comprises:
(1) contacting the atmosphere with a catalyst for catalysing the combustion of said gas,
(2) applying a potential difference across a resistance wire that is in thermal contact with the catalyst so as to heat the catalyst to a temperature at which the combustible gas are combusted, and
(3) varying the potential difference applied across the resistance wire with time thereby varying the operating temperature of the catalyst correspondingly,
(4) measuring the electrical resistance of the resistance wire, or a parameter that varies therewith, due to the presence of the combustible gas in the atmosphere over a range of such potential difference values,
(5) deriving from the change in the electrical resistance, or a parameter varying therewith, over the said range of potential difference values, a measure of the amount of combustible gas in the atmosphere,
(6) maintaining the catalyst in contact with the atmosphere being monitored throughout the time during which the said resistance changes are measured.

2. A method as claimed in claim 1, wherein the electrical resistance, or the parameter varying therewith, of the resistance wire is integrated over the said range of potential difference values to provide the said measure of the amount of combustible gas in the atmosphere.

3. A method as claimed in claim 2, wherein the atmosphere contains two or more combustible gases and wherein the said range of potential difference values over which the electrical resistance; or the parameter varying therewith, is integrated is so chosen that the integrated resistance per unit amount of each combustible gas is approximately the same as the integrated resistance per unit amount of the or each of the other combustible gas.

4. A method as claimed in any one of claims 1 to 3, wherein the potential difference applied across the resistance wire is varied cyclically and preferably wherein each cycle is repeated every 1 to 50 milliseconds, preferably every 5 to 30 milliseconds and more preferably every 10 to 20 milliseconds.

5. A method as claimed in claim 4, wherein a potential difference is maintained across the resistance wire for a part only of each cycle.

6. A method as claimed in claim 4 or claim 5, wherein a potential difference is applied across the resistance wire for 1 to 20 milliseconds, preferably for 2 to 10 milliseconds, and most preferably for about 4 milliseconds, in each cycle.

7. A method as claimed in claim 1, for measuring the amounts of two or more combustible gases in an atmosphere which comprises analysing the change in the electrical resistance, or the parameter varying therewith, of the resistance wire over the said range of such potential difference values and deriving therefrom the resistance change, or the change in the said other parameter, due to each combustible gas and calculating from the resistance changes the amounts of each gas in the atmosphere.

8. A method as claimed in claim 7, wherein the calculation of the amounts of each gas in the atmosphere comprises:
(1) taking the maximum resistance change, or change in the said other parameter, occurring over the said range of potential difference values for each gas and dividing the said maximum resistance changes by a predetermined value for each gas concerned, the resulting values giving the amounts of the gases in the atmosphere or
(2) integrating the resistance changes, or change in the said other parameter, resulting from each gas and dividing said integrated resistance changes by a predetermined value for each gas concerned, the resulting values being the amounts of the gases in the atmosphere.

9. An apparatus for measuring the amount of one or more combustible gas in an atmosphere, the apparatus comprising:
(1) a catalyst for catalysing the combustion of the said combustible gas,
(2) an electrical resistance wire in thermal contact with the catalyst,
(3) means for applying a potential difference across the resistance wire to heat the wire to a temperature at which the combustible gas will combust and for varying the applied potential with time over a range of potential difference values, thereby also varying the operating temperature of the catalyst,
(4) means for measuring the electrical resistance of the resistance wire, or a parameter varying therewith, due to the presence of the combustible gas over a range of such potential difference values,
(5) means for calculating from the said electrical resistance change, or change in the said other parameter, over the said potential difference range, the amount of combustible gas in the atmosphere,
the arrangement being such that the catalyst is maintained in contact with the atmosphere being monitored throughout the time during which the said resistance changes are measured.

10. An apparatus as claimed in claim 9, wherein the said calculating means integrates the electrical resistance, or the said other parameter, over the said range of potential difference values.

11. An apparatus as claimed in claim 10, for measuring the amount of two or more combustible gases in an atmosphere, wherein the range of potential difference values over which the electrical resistance of the resistance wire, or a parameter varying therewith, is integrated is such that the integrated resistance per unit amount of each combustible gas is approximately the same as the integrated resistance per unit amount of the or each of the other combustible gas.

12. An apparatus as claimed in any one of claims 9 to 11, wherein the said means for applying a potential difference varies the potential cyclically, preferably wherein each cycle is repeated very 1 to 50 milliseconds, more preferably every 5 to 30 milliseconds and most preferably every 10 to 20 milliseconds.

13. An apparatus as claimed in claim 12, wherein the said means for applying a potential difference maintains a potential difference across the resistance wire for part only of each cycle.

14. An apparatus as claimed in claim 12 or claim 13, wherein the said means for applying a potential difference across the resistance wire applies the said potential difference for 1 to 20 milliseconds, 2 to 10 milliseconds, and preferably for about 4 milliseconds, in each cycle.

15. An apparatus as claimed in claim 9, for measuring the amounts of two or more combustible gases in an atmosphere, wherein the calculating means analyses the change in the electrical resistance of the resistance wire, or a parameter varying therewith, over the range of potential difference values and derives the resistance change, or change in the other said parameter, therefrom due to each combustible gas and calculates from such resistance changes the amounts of each gas in the atmosphere.

16. An apparatus as claimed in claim 15, wherein the calculating means
(1) divides the maximum resistance change, or change in said other parameter, detected for each gas over the said range of potential difference values by a predetermined value for each gas concerned, the resulting values giving the amount of the various combustible gases in the atmosphere or
(2) integrates the resistance change, or change in said other parameter, attributable to each combustible gas over the said range of potential difference values and divides the said integrated resistance, or said other parameter, by a predetermined value for each gas concerned, the resulting values being the amounts of the various combustible gases in the atmosphere.

## Patentansprüche

1. Ein Verfahren zur Messung der Menge eines oder mehrerer brennbarer Gase in einer Atmosphäre,
wobei das Verfahren beinhaltet:
(1) Kontaktieren der Atmosphäre mit einem Katalysator für das Katalysieren der Reaktion des besagten Gases,
(2) dem Anlegen einer Potentialdifferenz über einen Widerstandsdraht, der in thermischem Kontakt mit dem Katalysator ist, so daß der Katalysator auf eine Temperatur aufgeheizt wird, bei welcher die brennbaren Gase verbrannt werden, und
(3) dem Variieren der Potentialdifferenz, die über den Widerstandsdraht angelegt ist, mit der Zeit, wobei die Betriebstemperatur des Katalysators korrespondierend variiert wird,
(4) dem Messen des elektrischen Widerstands des Widerstandsdrahtes oder eines Parameters, der damit variiert, infolge der Anwesenheit des brennbaren Gases in der Atmosphäre über einen Bereich solcher Potentialdifferenzwerte,
(5) dem Ableiten eines Maßes für die Menge des brennbaren Gases in der Atmosphäre aus der Änderung des elektrischen Widerstands oder eines damit variierenden Parameters über den genannten Bereich von Potentialdifferenzwerten,
(6) dem Halten des Katalysators in Kontakt mit der Atmosphäre, die überwacht wird, während der Zeit, während der die besagten Widerstandsänderungen gemessen werden.

2. Ein Verfahren nach Anspruch 1,
wobei der elektrische Widerstand - oder der damit variierende Parameter - des Widerstandsdrahtes Über den besagten Bereich der Potentialdifferenzwerte integriert wird, um das besagte Maß für die Menge des brennbaren Gases in der Atmosphäre zur Verfügung zu stellen.

3. Ein Verfahren nach Anspruch 2,
wobei die Atmosphäre zwei oder mehr brennbare Gase enthält und wobei der besagte Bereich von Potentialdifferenzwerten, über den der elektrische Widerstand oder der damit variierende Parameter integriert wird, so gewählt ist, daß der integrierte Widerstand pro Einheitsmenge eines jeden brennbaren Gases ungefähr der gleiche ist, wie der integrierte Widerstand pro Einheitsmenge der oder eines jeden der anderen brennbaren Gase.

4. Ein Verfahren nach einem der Ansprüche 1 bis 3, wobei die Potentialdifferenz, die über den Widerstandsdraht angelegt ist, zyklisch variiert wird und wobei vorzugsweise jeder Zyklus alle 1 bis 50 Millisekunden wiederholt wird, vorzugsweise alle 5 bis 30 Millisekunden und weiter bevorzugt alle 10 bis 20 Millisekunden.

5. Ein Verfahren nach Anspruch 4,
wobei eine Potentialdifferenz über den Widerstandsdraht nur für einen Teil eines jeden Zyklus aufrechterhalten wird.

6. Ein Verfahren nach Anspruch 4 oder 5, wobei eine Potentialdifferenz über den Widerstandsdraht für 1 bis 20 Millisekunden, bevorzugt für 2 bis 10 Millisekunden und am stärksten bevorzugt für ca. 4 Millisekunden in jedem Zyklus angelegt wird.

7. Ein Verfahren nach Anspruch 1 zur Messung der Mengen von zwei oder mehr brennbaren Gasen in einer Atmosphäre, enthaltend das Analysieren der Veränderung des elektrischen Widerstands - oder des damit variierenden Parameters - des Widerstandsdrahtes oder über den besagten Bereich solcher Potentialdifferenzwerte und das Ableiten der Widerstandsveränderung oder der Veränderung des besagten anderen Parameters infolge eines jeden brennbaren Gases daraus und der Berechnung der Menge eines jeden Gases in der Atmosphäre aus den Widerstandsänderungen.

8. Ein Verfahren nach Anspruch 7,
wobei die Berechnung der Mengen eines jeden Gases in der Atmosphäre umfaßt:
(1) Nehmen der maximalen Widerstandsänderung oder Änderungen in den besagten anderen Parametern, die in dem besagten Bereich der Potentialdifferenzwerte für jedes Gas auftreten, und Teilen der genannten maximalen Widerstandsänderung durch einen vorbestimmten Wert für jedes betrachtete Gas, wobei die resultierenden Werte die Mengen der Gase in der Atmosphäre ergeben, oder
(2) Integrieren der Widerstandsänderungen oder Änderung in dem besagten anderen Parameter, die sich durch jedes Gas ergeben, und Teilen der besagten integrierten Widerstandsänderungen durch einen vorbestimmten Wert für jedes betrachtete Gas, wobei die resultierenden Werte die Mengen der Gase in der Atmosphäre sind.

9. Eine Vorrichtung zur Messung der Menge eines oder mehrerer brennbarer Gase in einer Atmosphäre, enthaltend:
(1) einen Katalysator für das Katalysieren der Reaktion des besagten brennbaren Gases,
(2) einen elektrischen Widerstandsdraht in thermischem Kontakt mit dem Katalysator,
(3) Mittel zum Anlegen einer Potentialdifferenz über den Widerstandsdraht, um den Draht auf eine Temperatur zu heizen, bei welcher das brennbare Gas verbrennen wird, und um das angelegte Potential mit der Zeit über einen Bereich von Potentialdifferenzwerten zu variieren, wodurch auch die Betriebstemperatur des Katalysators variiert wird,
(4) Mittel zum Messen des elektrischen Widerstandes des Widerstandsdrahtes oder eines damit variierenden Parameters infolge der Anwesenheit des brennbaren Gases über einen Bereich solcher Potentialdifferenzwerte,
(5) Mittel zur Berechnung der Menge brennbaren Gases in der Atmosphäre aus der besagten elektrischen Widerstandsänderung oder Änderung in dem besagten anderen Parameter über den besagten Potentialdifferenz-bereich,
wobei die Anordnung so ist, daß der Katalysator in Kontakt mit der Atmosphäre gehalten wird, die überwacht wird, während der Zeit, während welcher die besagten Widerstandsänderungen gemessen werden.

10. Eine Vorrichtung nach Anspruch 9,
wobei die besagten Berechnungsmittel den elektrischen Widerstand oder den besagten anderen Parameter über den besagten Bereich von Potentialdifferenzwerten integrieren.

11. Eine Vorrichtung nach Anspruch 10 zur Messung der Menge von zwei oder mehr brennbaren Gasen in einer Atmosphäre,
wobei der Bereich der Potentialdifferenzwerte, über den der elektrische Widerstand des Widerstandsdrahtes oder eines damit veränderlichen Parameters integriert wird, so ist, daß der integrierte Widerstand pro Einheitsmenge eines jeden brennbaren Gases ungefähr der gleiche ist wie der integrierte Widerstand pro Einheitsmenge der oder eines jeden der anderen brennbaren Gase.

12. Eine Vorrichtung nach einem der Ansprüche 9 bis 11, wobei das besagte Mittel zum Anlegen einer Potentialdifferenz das Potential zyklisch variiert, wobei bevorzugt jeder Zyklus alle 1 bis 50 Millisekunden wiederholt wird, weiter bevorzugt alle 5 bis 30 Millisekunden und am stärksten bevorzugt alle 10 bis 20 Millisekunden.

13. Eine Vorrichtung nach Anspruch 12,
wobei das besagte Mittel zum Anlegen der Potentialdifferenz eine Potentialdifferenz über den Widerstandsdraht nur für einen Teil eines jeden Zyklus aufrechterhält.

14. Eine Vorrichtung nach dem Anspruch 12 oder 13, wobei das besagte Mittel zum Anlegen einer Potentialdifferenz über den Widerstandsdraht die besagte Potentialdifferenz für 1 bis 20 Millisekunden, 2 bis 10 Millisekunden und bevorzugt für ungefähr 4 Millisekunden in jedem Zyklus anlegt.

15. Eine Vorrichtung nach Anspruch 9 für die Messung der Mengen von zwei oder mehr brennbaren Gasen in einer Atmosphäre,
wobei das Berechnungsmittel die Veränderung im elektrischen Widerstand des Widerstandsdrahtes oder dem damit variierenden Parameter über den Bereich von Potentialdifferenzwerten analysiert und die Widerstandsänderung oder die Änderung im besagten anderen Parameter infolge eines jeden brennbaren Gases daraus ableitet und aus solchen Widerstandsänderungen die Mengen eines jeden Gases in der Atmosphäre berechnet.

16. Eine Vorrichtung nach Anspruch 15,
wobei das Berechnungsmittel
(1) die maximale Widerstandsänderung oder Änderung des besagten anderen Parameters, die für jedes Gas über den besagten Bereich von Potentialdifferenzwerten detektiert wurde, durch einen vorbestimmten Wert für jedes betrachtete Gas teilt, wobei die resultierenden Werte die Menge der verschiedenen brennbaren Gase in der Atmosphäre ergeben, oder
(2) die Widerstandsänderung oder Änderung in dem besagten anderen Parameter, die jedem brennbaren Gas zuzuschreiben ist, über den besagten Bereich von Potentialdifferenzwerten integriert und den besagten integrierten Widerstand oder besagten anderen Parameter durch einen vorbestimmten Wert für jedes betrachtete Gas teilt, wobei die resultierenden Werte die Mengen der unterschiedlichen brennbaren Gase in der Atmosphäre sind.

## Revendications

1. Procédé pour mesurer la quantité d'un ou plusieurs gaz combustible(s) dans une atmosphère, lequel procédé consiste à :
1) mettre l'atmosphère en contact avec un catalyseur en vue de catalyser la combustion dudit gaz,
2) appliquer une différence de potentiel de part et d'autre d'un fil résistif qui est en contact thermique avec le catalyseur, de façon à chauffer le catalyseur jusqu'à une température de combustion des gaz combustibles,
3) faire varier dans le temps la différence de potentiel appliquée de part et d'autre du fil résistif, de manière à faire varier la température de fonctionnement du catalyseur de façon correspondante,
4) mesurer, sur une gamme de ces valeurs de différences de potentiel, la résistance électrique du fil résistif, ou un paramètre variant avec celle-ci, due à la présence du gaz combustible dans l'atmosphère,
5) tirer de la variation de la résistance électrique, ou d'un paramètre variant avec celle-ci, sur ladite gamme de valeurs de différences de potentiel, une mesure de la quantité de gaz combustible dans l'atmosphère, et
6) maintenir le catalyseur en contact avec l'atmosphère mesurée, pendant toute la durée de mesure desdites variations de résistance.

2. Procédé selon la revendication 1, dans lequel la résistance électrique, ou le paramètre variant avec celle-ci, du fil résistif est intégrée sur ladite gamme de valeurs de différences de potentiel, pour obtenir ladite mesure de la quantité de gaz combustible dans l'atmosphère.

3. Procédé selon la revendication 2, dans lequel l'atmosphère contient deux gaz combustibles, ou davantage, et dans lequel ladite gamme de valeurs de différences de potentiel, sur laquelle est intégrée la résistance électrique, ou le paramètre variant avec celle-ci, est choisie de telle manière que la résistance intégrée par unité de la quantité de chaque gaz combustible est approximativement la même que la résistance intégrée par unité de la quantité de l'autre, ou de chacun des autres, gaz combustible(s).

4. Procédé selon l'une quelconque des revendications 1 à 3, dans lequel la différence de potentiel appliquée de part et d'autre du fil résistif varie cycliquement, et dans lequel chaque cycle est de préférence répété toutes les 1 à 50 millisecondes, de préférence toutes les 5 à 30 millisecondes, mieux, toutes les 10 à 20 millisecondes.

5. Procédé selon la revendication 4, dans lequel une différence de potentiel n'est maintenue de part et d'autre du fil résistif que pendant une partie de chaque cycle.

6. Procédé selon la revendication 4 ou la revendication 5, dans lequel une différence de potentiel est appliquée, de part et d'autre du fil résistif, pendant 1 à 20 millisecondes, de préférence pendant 2 à 10 millisecondes, mieux, pendant environ 4 millisecondes, au cours de chaque cycle.

7. Procédé selon la revendication 1 pour mesurer les quantités de deux gaz combustibles, ou davantage, dans une atmosphère, lequel consiste à analyser la variation de la résistance électrique, ou du paramètre variant avec celle-ci, du fil résistif sur ladite gamme desdites valeurs de différences de potentiel et à tirer de celle-ci la variation de résistance, ou la variation dudit autre paramètre, due à chaque gaz combustible, puis à calculer à partir des variations de résistance les quantités de chaque gaz dans l'atmosphère.

8. Procédé selon la revendication 7, dans lequel le calcul des quantités de chaque gaz dans l'atmosphère consiste :
1) à prendre la variation maximale de résistance, ou la variation dudit autre paramètre, se produisant, pour chaque gaz, sur ladite gamme de valeurs de différences de potentiel et à diviser lesdites variations maximales de résistance par une valeur prédéterminée pour chaque gaz concerné, les valeurs résultantes donnant les quantités des gaz dans l'atmosphère, ou
2) à intégrer les variations de résistance, ou la variation dudit autre paramètre, dues à chaque gaz et à diviser lesdites variations de résistance intégrées par une valeur prédéterminée pour chaque gaz concerné, les valeurs résultantes étant les quantités des gaz dans l'atmosphère.

9. Appareil pour mesurer la quantité d'un ou plusieurs gaz combustible(s) dans une atmosphère, l'appareil comprenant :
1) un catalyseur pour catalyser la combustion dudit gaz combustible,
2) un fil électrique résistif en contact thermique avec le catalyseur,
3) des moyens pour appliquer une différence de potentiel de part et d'autre du fil résistif, afin de chauffer le fil jusqu'à une température de combustion du gaz combustible et de faire varier le potentiel appliqué dans le temps, sur une gamme de valeurs de différences de potentiel, de manière à faire également varier la température de fonctionnement du catalyseur,
4) des moyens pour mesurer, sur une gamme de ces valeurs de différences de potentiel, la résistance électrique du fil résistif, ou un paramètre variant avec celle-ci, due à la présence du gaz combustible,
5) des moyens pour calculer la quantité de gaz combustible dans l'atmosphère à partir de ladite variation de résistance électrique, ou de la variation dudit autre paramètre, sur ladite gamme de différences de potentiel,
le dispositif étant tel que le catalyseur est maintenu en contact avec l'atmosphère mesurée pendant toute la durée de mesure desdites variations de résistance.

10. Appareil selon la revendication 9, dans lequel lesdits moyens de calcul intègrent la résistance électrique, ou ledit autre paramètre, sur ladite gamme de valeurs de différences de potentiel.

11. Appareil selon la revendication 10, pour mesurer la quantité de deux gaz combustibles, ou davantage, dans une atmosphère, dans lequel la gamme des valeurs de différences de potentiel sur laquelle est intégrée la résistance électrique du fil résistif, ou un paramètre variant avec celle-ci, est telle que la résistance intégrée par unité de la quantité de chaque gaz combustible est approximativement la même que la résistance intégrée par unité de la quantité de l'autre, ou de chacun des autres, gaz combustible(s).

12. Appareil selon l'une quelconque des revendications 9 à 11, dans lequel lesdits moyens pour appliquer une différence de potentiel font varier le potentiel cycliquement, chaque cycle étant de préférence répété toutes les 1 à 50 millisecondes, de préférence toutes les 5 à 30 millisecondes, mieux, toutes les 10 à 20 millisecondes.

13. Appareil selon la revendication 12, dans lequel lesdits moyens pour appliquer une différence de potentiel ne maintiennent une différence de potentiel de part et d'autre du fil résistif que pendant une partie de chaque cycle.

14. Appareil selon la revendication 12 ou la revendication 13, dans lequel lesdits moyens pour appliquer une différence de potentiel de part et d'autre du fil résistif appliquent ladite différence de potentiel pendant 1 à 20 millisecondes, de préférence pendant 2 à 10 millisecondes, mieux, pendant environ 4 millisecondes, au cours de chaque cycle.

15. Appareil selon la revendication 9 pour mesurer les quantités de deux gaz combustibles, ou davantage, dans une atmosphère, dans lequel les moyens de calcul analysent la variation de la résistance électrique du fil résistif, ou d'un paramètre variant avec celle-ci, sur la gamme des valeurs de différences de potentiel et tire de celle-ci la variation de résistance, ou la variation dudit autre paramètre, due à chaque gaz combustible, puis calcule à partir de ces variations de résistance les quantités de chaque gaz dans l'atmosphère.

16. Appareil selon la revendication 15, dans lequel les moyens de calcul :
1) divisent la variation maximale de résistance, ou la variation maximale dudit autre paramètre, détectée pour chaque gaz sur ladite gamme de valeurs de différences de potentiel, par une valeur prédéterminée pour chaque gaz concerné, les valeurs résultantes donnant la quantité des différents gaz combustibles dans l'atmosphère, ou
2) intègrent la variation de résistance, ou la variation dudit autre paramètre, pouvant être attribuée à chaque gaz combustible, sur ladite gamme de valeurs de différences de potentiel et divisent ladite résistance intégrée, ou ledit autre paramètre intégré, par une valeur prédéterminée pour chaque gaz concerné, les valeurs résultantes étant les quantités des différents gaz combustibles dans l'atmosphère.
